(19) **Europäisches Patentamt**

**European Patent Office**

**Office européen des brevets**

(11) **EP 1 001 398 B1**

(12) **EUROPEAN PATENT SPECIFICATION**

(45) Date of publication and mention
of the grant of the patent:
**30.03.2005 Bulletin 2005/13**

(51) Int Cl.[7]: **G09C 1/00**, H04L 9/06

(21) Application number: **98929747.8**

(86) International application number:
**PCT/JP1998/002915**

(22) Date of filing: **30.06.1998**

(87) International publication number:
**WO 1999/000783 (07.01.1999 Gazette 1999/01)**

(54) **CIPHERING APPARATUS**

**VERSCHLÜSSELUNGSGERÄT**

**DISPOSITIF DE CHIFFREMENT**

(84) Designated Contracting States:
**DE FR GB IT**

(30) Priority: **30.06.1997 JP 17367297**

(43) Date of publication of application:
**17.05.2000 Bulletin 2000/20**

(73) Proprietor: **Nippon Telegraph and Telephone
Corporation
Tokyo 163-8019 (JP)**

(72) Inventors:
- **KANDA, Masayuki-Nippon Telegraph and Tele.
Corp.
Shinjuku-ku, Tokyo 163-1419 (JP)**
- **TAKASHIMA, Youichi-Nippon Telegraph and
Tele.Corp.
Shinjuku-ku, Tokyo 163-1419 (JP)**
- **AOKI, Katsuhiko
Minato-ku, Tokyo 107-0062 (JP)**
- **MATSUMOTO, Tsutomu
Yokohama-shi, Kanagawa 227-0048 (JP)**

(74) Representative: **Hoffmann, Eckart, Dipl.-Ing.
Patentanwalt,
Bahnhofstrasse 103
82166 Gräfelfing (DE)**

(56) References cited:
**WO-A-98/09705       CA-A- 2 203 380
JP-A- 9 054 547**

- **AOKI K ET AL: "DIFFERENTIAL-LINEAR
CRYPTANALYSIS OF FEAL-8" IEICE
TRANSACTIONS ON FUNDAMENTALS OF
ELECTRONICS, COMMUNICATIONS AND
COMPUTER SCIENCES, INSTITUTE OF
ELECTRONICS INFORMATION AND COMM.
ENG. TOKYO, JP, vol. E79-A, no. 1, 1996, pages
20-27, XP000558715 ISSN: 0916-8508**
- **MITSURU MATSUI, "Provable Safety of
Differential Decoding and Linear Decoding of
Block Cipher (in Japanese)", PREPRINT OF THE
18TH SYMPOSIUM ON INFORMATION
THEORIES AND THEIR APPLICATIONS, THE
INSTITUTE OF INFORMATION THEORIES AND
THEIR APPLICATIONS, Vol. 1 of 2, October 1995,
p. 175-178, XP002917230**
- **MITSURU MATSUI et al., "Practical Block Cipher
Having Provable Safety of Differential Decoding
and Linear Decoding (in Japanese)",
SYMPOSIUM ON CIPHER AND INFORMATION
SECURITY, SCIS96, INFORMATION SECURITY
RESEARCH SPECIAL COMMITTEE OF IEICE,
January 1996, SCIS96-4C, XP002917231**
- **MASATO KANDA et al., "Structure of Round
Function Using a Little S-Box (Part 1) (in
Japanese)", TECHNICAL RESEARCH REPORT
OF IEICE (ISEC96 14-22), Vol. 97, No. 181, 18 July
1997, p. 41-52, XP002917232**

**Description**

TECHNICAL FIELD

The present invention relates to an encryption device for concealing data in data communication or storage and, more particularly, to an encryption device of a secret-key algorithm which encrypts or decrypts data in blocks using a secret key.

A typical secret-key algorithm, which is used in an encryption device to conceal data, is the DES (Data Encryption Standard) that is a FIPS-approved algorithm for encryption (FIPS 46-3).

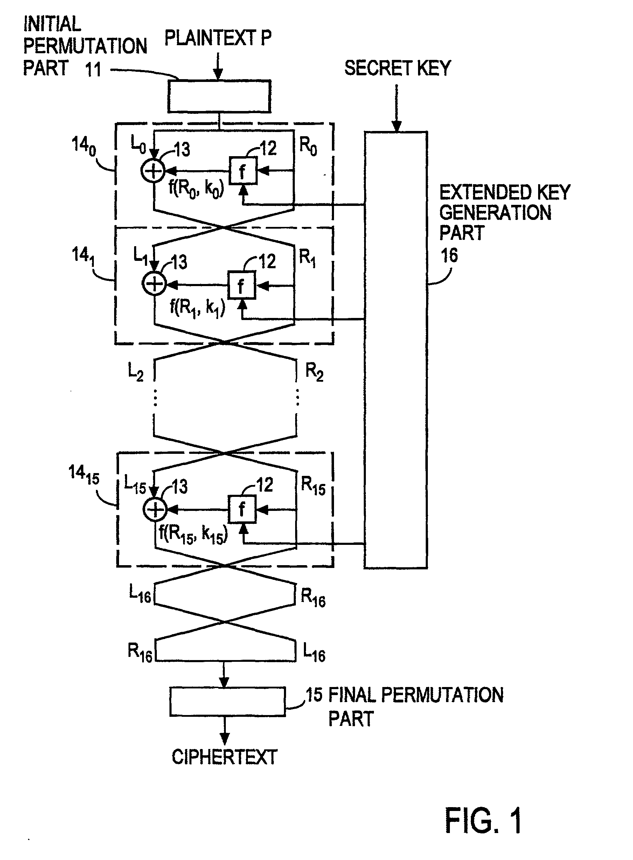

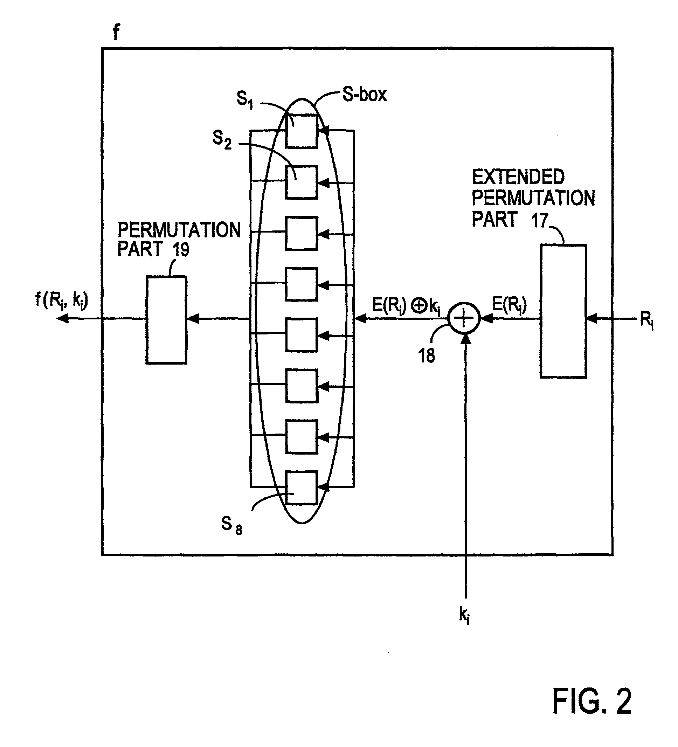

Fig. 1 illustrates the functional configuration of the DES. The DES uses a 56-bit secret key to encrypt or decrypt data in blocks of 64 bits. In Fig. 1 the encryption process begins with the initial permutation of 64 bits of a plaintext P in an initial permutation part 11 which is followed by splitting the transformed data into two pieces of 32-bit block data $L_0$ and $R_0$. The block data $R_0$ is input into a function operation part (which is commonly called a round function) 12 (the details of which are shown for an i-th round processing part $14_i$ (i=0, 1, ..., 15) in Fig. 2), wherein it is transformed to $f(R_0, k_0)$ using a 48-bit extended key piece $k_0$. This transformed data $f(R_0, k_0)$ and the block data $L_0$ are exclusive ORed in an XOR circuit 13, and its output and the block data $R_0$ are interchanged to obtain the next block data $L_1$, $R_1$. That is,

$$R_1 = L_0 \oplus f(R_0, k_0)$$

$$L_1 = R_0 \qquad\qquad (1)$$

A 0-th round processing part $14_0$ comprises an operation part 12, an exclusive OR circuit 13 and a data swapping part, by which two pieces of input data $L_0$ and $R_0$ are subjected to round processing to provide output block data $L_1$ and $R_1$, and similar round processing parts $14_1$ to $14_{15}$ are provided In cascade. The processing by the i-th round processing part $14_i$ will hereinafter be referred to as i-th processing, where i=0, ..., 15. That is, each round processing part $14_i$ ($0 \le i \le 15$) performs the following processing

$$R_{i+1} = L_1 \oplus f(R_i, k_i)$$

$$L_{i+1} = R_i \qquad\qquad (2)$$

and the two pieces of ouput data $R_{16}$ and $L_{16}$ from the the last round processing part are combined into 64-bit data, which is transformed in a final permutation part 15 to provide a 64-bit ciphertext. The decryption processing can be performed following the same procedure as that for the encryption processing except inputting extended keys $k_0$, $k_1$, ..., $k_{14}$, $k_{15}$ into a function f in the order $k_{15}$, $k_{14}$, ..., $k_1$, $k_0$ which is reverse to that in the encryption processing. In such an instance, the outputs $L_{16}$ and $R_{16}$ from the final round processing part $14_{15}$ are further swapped as depicted, and in the decryption processing the plaintext is provided intact at the output of the final permutation part 15 by inputting the ciphertext into the initial permutation part 11 to subject it to the processing of Fig. 1. Of course, exactly the same result could be obtained even by providing data to the final permutation part 15 without swapping the outputs of the final round processing part $14_{15}$. Incidentally, the extended key pieces $k_0$, $k_1$, ..., $k_{14}$, $k_{15}$ (also referred to as extended keys hereinafter) are generated by extending a 56-bit secret key to 16 48-bit pieces of an extended key with a total of 768 bits in an extended key generation part 16 separate of the encryption processing.

The processing in the function operation part 12 is performed as shown in Fig. 2. To begin with, the 32-bit block data $R_1$ is transformed to 48-bit data $E(R_1)$ in an extended permutation part 17. This output data and the extended key $k_1$ are exclusive ORed in an XOR circuit 18, whose output is transformed to 48-bit data $E(R_1) \oplus k_1$, which is then split to eight pieces of 6-bit sub-block data. The eight pieces of sub-block data are input into different S-boxes $S_1$ to $S_8$ to derive therefrom a 4-bit output respectively. Incidentally, the S-box $S_j$ (j=1, ..., 8) is a nonlinear transformation table that transforms the 6-bit input data to the 4-bit output data, and this is a part that assumes a key role essential in providing security for the DES. The eight pieces of output data from the S-boxes $S_1$ to $S_8$ are concatenated again to 32-bit data, which is applied to a permutation part 19 to obtain an output $f(R_1, k_1)$ of the function f which is exclusive ORed with $L_1$ as depicted in Fig. 1.

Next, a description will be given of cryptanalysis techniques. A wide variety of cryptanalysis techniques have been proposed for the DES and other traditional secret-key algorithms; extremely effective cryptanalysis techniques among them are a differential cryptanalysis technique proposed by E. Biham and A. Shamir ("Differential Cryptanalysis of DES-like Cryptosystems," Proceedings of CRYPTO'90) and a linear cryptanalysis technique proposed by Matsui (linear Cryptanalysis (I) of DES Cryptosystem," The 1993 Symposium on Cryptography and Information Security 1993, SCIS93-3C).

With the difference between two pieces of data X and X* defined as

$$\Delta X = X \oplus X^* \tag{3}$$

the differential cryptanalysis aims to obtain the extended key $k_{15}$ in the final round by applying to the following equations two sets of plaintext-ciphertext pairs that an attacker possesses. Let $L_1$ and $R_1$ represent two pieces of block data for a first plaintext input into each round processing part $14_i$ of Fig. 1 and $L^*_i$ and $R^*_i$ represent two pieces of block data for a second plaintext input into each round processing part $14_i$. And let it be assumed that ciphertexts are provided in response to the input of these first and second plaintexts. Under the definition of Eq. (3), it holds that

$$\Delta L_i = L_i \oplus L^*_i$$

$$\Delta R_i = R_i \oplus R^*_i \tag{4}$$

In Fig. 1, since $L_{15} = R_{14}$, $L^*_{15} = R^*_{14}$, $L_{16} = R_{15}$ and $L^*_{16} = R^*_{15}$, the following equations hold

$$R_{16} = L_{15} \oplus f(R_{15}, k_{15})$$

$$R^*_{16} = L^*_{15} \oplus f(R^*_{15}, k_{15}) \tag{5}$$

and the exclusive OR of both sides of these two equations is obtained as follows:

$$\Delta R_{16} = \Delta L_{15} \oplus f(L_{16}, k_{15}) \oplus f(L_{16} \oplus \Delta L_{16}, k_{15}) \tag{6}$$

The exclusive ORing of its both sides with $\Delta R_{14} = \Delta L_{15}$ gives the following equation:

$$f(L_{16}, k_{15}) \oplus f((L_{16} \oplus \Delta L_{16}), k_{15}) = \Delta R_{16} \oplus \Delta R_{14} \tag{7}$$

At this time, $L_{16}$, $\Delta L_{16}$ and $\Delta R_{16}$ are data available from the ciphertext, and hence they are known information. Hence, if the attacker can correctly obtain $\Delta R_{14}$, then only $k_{15}$ in the above equation becomes an unknown constant; the attacker can find a correct $k_{15}$ without fail by making an exhaustive search for $k_{15}$ through utilization of the known sets of plaintext-ciphertext pairs. On the other hand, $\Delta R_{14}$ is difficult in general to obtain since this value is an intermediate difference value. Then, assume that each round processing part $14_i$ is approximated by the following equations with a probability pi in each of the 0-th to the last round but one:

$$\Delta R_{i+1} = \Delta L_i \oplus \Delta\{f(\Delta R_i)\}$$

$$\Delta L_{i+1} = \Delta R_{i+1} \tag{8}$$

The point is that when certain $\Delta R_i$ is input, $\Delta\{f(\Delta R_i)\}$ can be predicted with the probability $p_i$ regardless of the value of the extended key $k_i$. The reason for which such approximations can be made is that $\Delta\{f(\Delta R_i)\}$ is affected only by the S-box part which is a nonlinear transformation table, and that according to the input differences thereto, the S-boxes provide an extremely uneven distribution of difference outputs. For example, in the S-box $S_1$, an input difference

"110100" is transformed to an output difference "0010" with a probability of 1/4. Then, the approximation for each round is obtained by assuming that each S-box is capable of predicting the relationship between the input difference and the output difference with a probability of $p_{si}$ and by combining them. Furthermore, the concatenation of such approximations in the respective rounds makes it possible to obtain $\Delta R_{14}$ from $\Delta L_0$ and $\Delta R_0$ ($\Delta L_0$ and $\Delta R_0$ are data derivable from the plaintext, and hence they are known.) with a probability of $P = \Pi p_i$. Incidentally, the higher the probability $P$, the easier the cryptanalysis. After the extended key $k_{15}$ is thus obtained, a similar calculation is made of the extended key $k_{14}$ regarding it as a 15-round DES that is one round fewer than in the above; such operations are repeated to obtain the extended keys one by one to $k_0$.

Biham et al. say that the DES could be broken by this cryptanalysis if $2^{47}$ sets of chosen plaintext-ciphertext pairs are available.

The linear cryptanalysis aims to obtain extended keys by constructing the following linear approximate expression and using the maximum likelihood method with sets of known plaintext-ciphertext pairs to the attacker.

$$(L_0, R_0) \cdot {}^{\ulcorner}(L_0, R_0) \oplus (L_{16}, R_{16}) \cdot {}^{\ulcorner}(L_{16}, R_{16}) = (k_0, k_1, ..., k_{15}) \cdot {}^{\ulcorner}(k_0, k_1, ..., k_{15}) \tag{9}$$

where ${}^{\ulcorner}(X)$ represents the vector that chooses a particular bit position of X, and it is called a mask value.

The role of the linear approximate expression is to approximately replace the cryptographic algorithm with a linear expression and separate it into a part concerning the set of plaintext and ciphertext and a part concerning the extended key. That is, in the set of plaintext-ciphertext pair, the exclusive ORs between the values at particular bit positions of the plaintext and those of the ciphertext all take a fixed value, which indicates that it equals the exclusive OR of the values at particular bit positions of extended keys. This means that the attacker gets information

$(k_0, k_1, ..., k_{15}) \cdot {}^{\ulcorner}(k_0, k_1, ..., k_{15})$ (1 bit)

from information

$(L_0, R_0) \cdot {}^{\ulcorner}(L_0, R_0) \oplus (L_{16}, R_{16}) \cdot {}^{\ulcorner}(L_{16}, R_{16})$. At this time, $(L_0, R_0)$ and $(L_{16}, R_{16})$ are the plaintext and the ciphertext, and hence they are known. For this reason, if the attacker can correctly obtain ${}^{\ulcorner}(L_0, R_0)$, ${}^{\ulcorner}(L_{16}, R_{16})$ and ${}^{\ulcorner}(k_0, k_1, ..., k_{15})$, then he can obtain $(k_0, k_1, ..., k_{15}) \cdot {}^{\ulcorner}(k_0, k_1, ..., k_{15})$ (1 bit).

In the DES, it is only in the S-box that the nonlinear transformation is performed; hence, if only the S-box can be linearly represented, the linear approximate expression can easily be constructed. Then, assume that each S-box $S_i$ can be linearly represented with a probability of $p_{si}$. The point here is that when the input mask value for the S-box is given, its output mask value can be predicted with the probability of $p_{si}$. The reason for this is that the S-boxes, which form a nonlinear transformation table, provide an extremely uneven distribution of difference mask values according to the input mask values. For example, in the S-box $S_5$, when the input mask value is "010000," an output mask value "1111" is predicted with a probability of 3/16. By combining mask values in these S-boxes, a linear approximation can be made in each round between the input mask value and the output mask value with a probability $p_i$, and by concatenating the linear approximations in the respective rounds, ${}^{\ulcorner}(L_0, R_0)$, ${}^{\ulcorner}(L_{16}, R_{16})$ and ${}^{\ulcorner}(k_0, k_1, ..., K15)$ are obtained with the following probability:

$$P = 2^{n-1} \Pi | p_i - 1/2 | \tag{10}$$

Here, the higher the probability $P$, the easier the cryptanalysis.

According to Matsui, he has succeeded in the analysis of the DES by this cryptanalysis through utilization of $2^{43}$ sets of known plaintext-ciphertext pairs.

To compete against the above cryptanalysis techniques, the probability $P$ needs only to be reduced to a sufficiently low value. Accordingly, a wide variety of proposals have been made to lessen the probability $P$, and the easiest way to provide increased security in the conventional cryptosystem is to increase the number of rounds. For example, a Triple-DES formed by a concatenation of three DESs essentially increases the number of rounds from 16 to 48, and it provides a far lower probability $P$ than in the case of the DES.

However, to increase the number of rounds with a view to competing against the cryptanalysis techniques described above inevitably enlarges the scale of the cryptographic device used and increases the amount of data to process as well. For example, if the number of rounds is tripled, the workload for encryption will also increase threefold. That is, since the encryption speed of the present DES is about 10 Mbps in the Pentium PC class, the encryption speed of the Triple-DES goes down to around 3.5 Mbps. On the other hand, networks and computers are becoming increasingly faster year by year, and hence there is also a demand for encryption devices that keep up with such speedups. With conventional cryptographic devices, it is extremely difficult, therefore, to simultaneously meet the requirements of speedup and security.

The document CA-A-2,203,380 discloses a cryptographic device for encrypting input data by sequentially processing it by a plurality of round processes, comprising an initial splitting part for splitting the input data into two pieces of block data; a key storage part for storing an extended key; a plurality of cascade-connected round processing parts which are supplied with said two pieces of block data for sequentially processing them using respective split pieces of the extended key; and a final combining part for combining two pieces of block data output from the last one of said plurality of cascade-connected round processing parts into a single piece of data and for outputting that single piece of data. Each of said plurality of round processing parts comprises: a nonlinear function part for transforming one of two pieces of input block data input into the respective round processing part from the preceding stage by using a corresponding one of said split pieces of the extended key; a linear operation part for linearly operating the output data from said nonlinear function part and the other one of said two pieces of input block data; and a swapping part for swapping the output data from said linear operation part and the piece of input block data to said nonlinear function part and for providing the two pieces of swapped data as two pieces of input block data to the round processing part of the subsequent stage. The nonlinear function part comprises plural sub-round processing parts having the same structure as the round processing parts. Therefore, the differential cryptanalysis technique can be applied to both the basic structure of the cryptographic device and the nonlinear function part.

The present invention is intended to obviate the abovesaid defects of the prior art and has for its object to provide a cryptographic device that satisfies the security requirement without increasing the number of rounds.

DISCLOSURE OF THE INVENTION

This object is achieved by a cryptographic device as claimed in claim 1. Preferred embodiments of the invention are subject-matter of the dependent claims.

To provide increased security, the invention comprises by a second linear transformation part which linearly transforms the output data of the combining part to the output data of the nonlinear function part.

Furthermore, the invention is characterized in that either one or both of the first and second linear transformation parts are key-dependent linear transformation parts which linearly transform the input data thereto based on key data stored in the key storage part.

According to the present invention, it is guaranteed that when the probability in the S-boxes is $p_{si} \leq p_b < 1$ (where $p_b$ is the maximum differential or linear probability in the S-boxes), the probability of approximating each round is $p_i \leq p_b^2$ (when the input difference to the function f is not 0 in the case of the differential cryptanalysis, and when the output mask value from the function f is not 0 in the case of the linear cryptanalysis). And when the function f is bijective (in which case a different input always provides a different output), if the number of rounds of the cipher is set at 3m, then the probability of the cipher becomes $P \leq p_i^{2m} \leq p_b^{4m}$. In general, cipher are regarded as being secure against the differential and linear cryptanalysis schemes if $P < 2^{-64}$; hence, it is necessary only to satisfy $m > -16/\{\log 2\{p_b\}\}$, and if $p_b \leq 2^{-4}$, it is possible to ensure security with a smaller number of rounds than 16 rounds needed in the DES. The probability of security changes for each multiple of m rounds.

The present invention ensures security against the differential and linear cryptanalysis with a relatively small number of rounds, and hence it permits implementation of a cryptographic device which copes with both security and low workload.

BRIEF DESCRIPTION OF THE DRAWINGS

Fig. 1      ist diagram depicting the functional configuration of a conventional DES cryptographic device.

Fig. 2      ist a diagram depicting a concrete functional configuration of an f-functional calculus part 12 in Fig. 1.

Fig. 3      ist a diagram illustrating the functional configuration of Embodiment 1 of the present invention.

Fig. 4      ist a diagram showing in detail an example of the functional configuration of a nonlinear function part 304 in Embodiment 1.

Fig. 5      ist a diagram depicting a concrete example of a key-dependent linear transformation part 347 in Fig. 4.

Fig. 6      ist a diagram illustrating the functional configuration of Embodiment 2 of the present invention.

Fig. 7A      is a diagram showing in detail the functional configuration of a nonlinear function part 304 in Embodiment 2.

Fig. 7B    is a diagram showing a concrete example of a linear transformation part 354 in the nonlinear function part 304.

Fig. 8    is a diagram illustrating the functional configuration of Embodiment 3 of the present invention.

Fig. 9    is a diagram showing in detail the functional configuration of a nonlinear function part 304 in Embodiment 3.


BEST MODE FOR CARRYING OUT THE INVENTION


EMBODIMENT 1

An embodiment of the present invention will be described below with reference to the accompanying drawings.

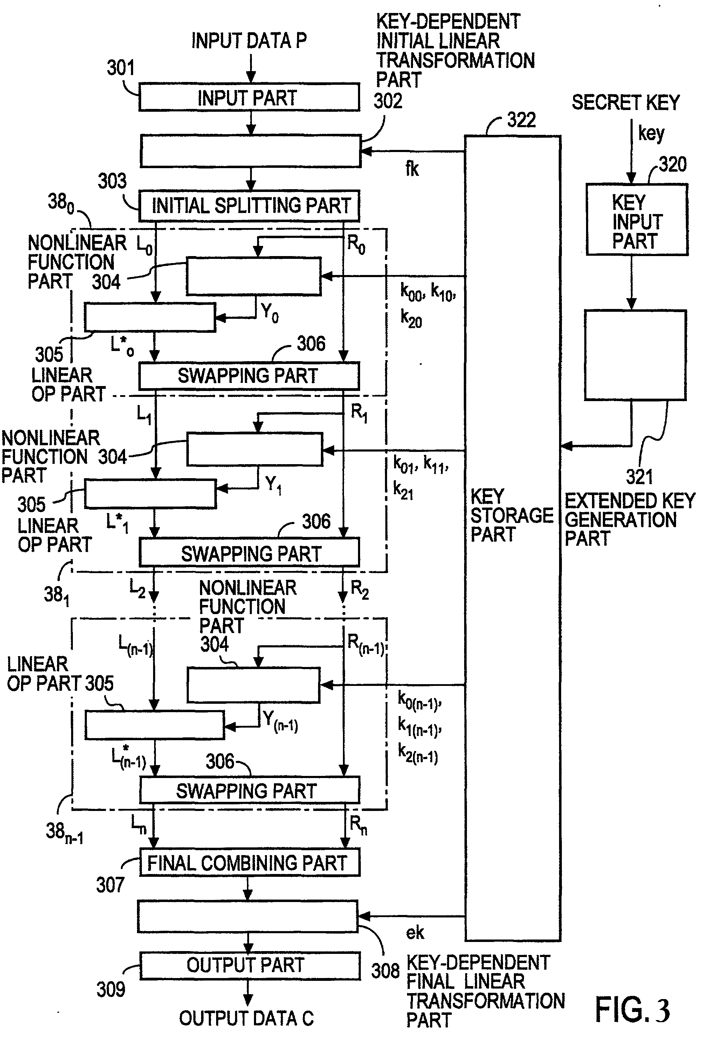

Fig. 3 depicts the functional configuration for an encryption procedure in the cryptographic device according to an embodiment of the present invention. The cryptographic device of the present invention also splits input data to two pieces of block data $L_0$ and $R_0$ and subjects them to round processing by n cascade-connected round processing parts $38_0$ to $38_{n-1}$ in a sequential order; each round processing part $38_i$ (i=0, 1,..., n-1) is made up of a nonlinear function part 304 corresponding to the round function part 12 in Fig. 1, a linear operation part 305 corresponding to the XOR circuit 13 in Fig. 1 and a swapping part 306.

Input data P, which corresponds to a plaintext, is entered into the cryptographic device via an input part 301. The following key data is generated in advance by a extended key generation part 321 on the basis of the data input thereto from a key input part 320 and stored in a key storage part 322.

$$\{fk; k_{00}, k_{10}, k_{20}; k_{01}, k_{11}, k_{21}; ...; k_{0(n-1)}, k_{1(n-1)}, k_{0(n-1)}; ek\}$$

The input plaintext data P is transformed in a key-dependent initial linear transformation part 302 with the extend key fk stored in the key storage part 322, thereafter being split in an initial splitting part 303 to two pieces of block data $L_0$ and $R_0$. For example, 64-bit data is split to two pieces of 32-bit block data $L_0$ and $R_0$. The block data $R_0$ is input to the nonlinear function part 304 of the 0-th round processing part $38_0$, together with the extended key $k_{00}$, $k_{10}$ and $k_{20}$ stored in the key storage part 322, and in the nonlinear function part it is transformed to data $Y_0$. The data $Y_0$ and the block data $L_0$ are transformed to data $L_0$* through an operation in the linear operation part 305. The data $L_0$* and the block data $R_0$ are subjected to data-position swapping in the swapping part 306 to provide $L_1 = R_0$ and $R_1 = L_0$*; $L_1$ and $R_1$ are fed to the next first round processing part $38_1$.

Thereafter, in an i-th round processing part $38_i$ (i=1, ..., n-1) the same processing as described above is repeated for two pieces of block data $L_i$ and $R_i$. That is, in the i-th round processing part $38_i$ the data $R_i$, one of the two pieces of block data $L_i$ and $R_i$, is input into the nonlinear function part 304, together with the extended key $k_{0i}$, $k_{1i}$ and $k_{2i}$ stored in the key storage part 322, and in the nonlinear function part 304 it is transformed to data $Y_i$. The data $Y_i$ and the block data $L_i$ are transformed to data $L_i$* by an operation in the linear operation part 305. The data $L_i$* and the data $R_i$ are swapped in data position in the swapping part 306 to $L_{i+1} = R_i$ and $R_{i+1} = L_i$*. The linear operation part 305 is one that performs, for instance, an exclusive-OR operation.

Letting n represent the repeat count suitable to ensure security of the cryptosystem, two pieces of data $L_n$ and $R_n$ are obtained as the result of such repeated processing by the round processing parts $38_0$ to $38_{n-1}$. These pieces of data $L_n$ and $R_n$ are combined into a single piece of block data in a final combining part 307; for example, two pieces of 32-bit data $L_n$ and $R_n$ are combined to 64-bit data. Then the thus combined data is transformed in a key-dependent final linear transformation part 308 using the extended key ek stored in the key storage part 322, and output data C is provided as a ciphertext from an output part 309.

To decrypt, the encryption procedure needs only to be reversed, by which the plaintext P can be derived from the ciphertext C. This can be done, for example, by inputting ciphertext data in place of the input data in Fig. 3 and then inputting the extended key in a sequential order reverse to that in Fig. 3, that is, ek, $k_{0(n-1)}$, $k_{1(n-1)}$, $k_{2(n-1)}$, ..., $k_{01}$, $k_{11}$, $k_{21}$, $k_{00}$, $k_{10}$, $k_{21}$, $f_k$.

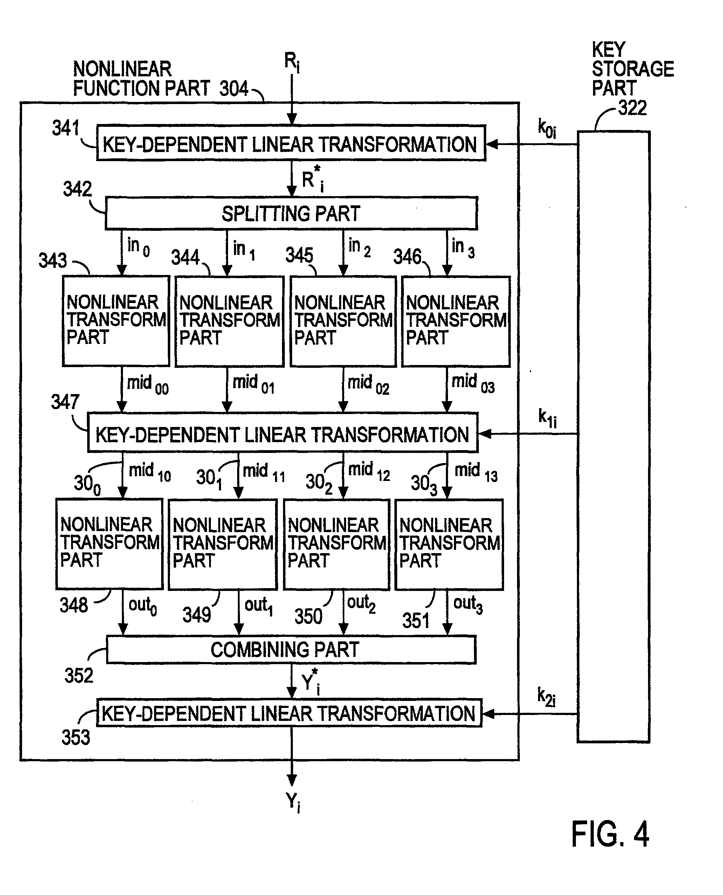

Fig. 4 illustrates the functional configuration of the nonlinear function part 304 used in each round processing part $38_i$. The block data $R_i$ to the i-th round processing part $38_i$ constitutes input data to the nonlinear function part 304, together with the extended key $k_{0i}$, $k_{1i}$ and $k_{2i}$ stored in the key storage part 322. The block data $R_i$ is linearly transformed to data $R_i$* in a key-dependent linear transformation part 341 using the extended key $k_{0i}$. The data $R_i$* is splitting, for instance, to four pieces of 8-bit data $in_0$, $in_1$, $in_2$ and $in_3$ in a splitting part 342. The four pieces of data $in_0$, $in_1$, $in_2$ and $in_3$ are nonlinearly transformed to four pieces of data $mid_{00}$, $mid_{01}$, $mid_{02}$ and $mid_{03}$ in nonlinear transformation parts 343, 344, 345 and 346, respectively, from which they are input to a key-dependen t linear transformation part 347.

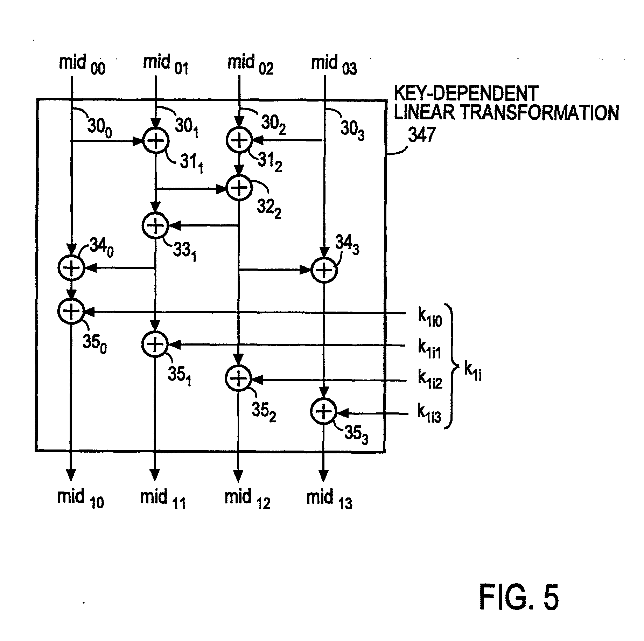

The key-dependent linear transformation part 347 is made up of four processing routes $30_0$ to $30_3$ each of which contains at least one exclusive OR circuit as depicted in Fig. 5; these processing routes are logically combined by those exclusive OR circuits. Each processing route performs a linear operation (an exclusive-OR operation) of its own data with those of the other processing routes to generate homogenized pieces of data in the respective processing routes; in the example of Fig. 5, they are further linearly processed by extended key $k_{1i}$, That is, the pieces of data $mid_{00}$, $mid_{01}$, $mid_{02}$ and $mid_{03}$ are fed into the processing routes $30_0$ to $30_3$, respectively. In the processing route $30_1$ the pieces of input data $mid_{00}$ and $mid_{01}$ are exclusive ORed by an XOR $31_1$, and in the processing route $30_2$ the pieces of input data $mid_{02}$ and $mid_{03}$ are exclusive ORed by an XOR $31_2$, and the outputs from the XOR $31_1$ and the XOR $31_2$ are exclusive ORed by an XOR $32_2$. The outputs from the XOR $31_1$ and the XOR $32_2$ are exclusive ORed by an XOR $33_1$, then the output from the XOR $33_1$ and the input data $mid_{00}$ are exclusive ORed by an XOR $34_0$, and the output from the XOR $32_2$ and the input data $mid_{03}$ are exclusive ORed by an XOR $34_3$. Furthermore, the outputs from the XORs $34_0$, $33_1$, $32_2$ and $34_3$ and extended key $k_{1i0}$, $k_{1i1}$, $k_{1i2}$ and $k_{1i3}$ are exclusive ORed by XORs $35_0$ to $35_3$, from which $mid_{10}$, $mid_{11}$, $mid_{01}$ and $mid_{13}$ are output, respectively. That is, the input data $mid_{00}$, $mid_{01}$, $mid_{02}$ and $mid_{03}$ to the processing routes $30_0$ to $30_3$ are associated with one another and then undergo linear transformations which are dependent on the key data $k_{1i0}$, $k_{1i1}$, $k_{1i2}$ and $k_{1i3}$, respectively. In short, logical operations given by the following logical expressions are performed.

$$mid_{10} = mid_{00} \oplus mid_{02} \oplus mid_{03} \oplus k_{1i0}$$

$$mid_{11} = mid_{02} \oplus mid_{03} \oplus k_{1i1}$$

$$mid_{12} = mid_{00} \oplus mid_{01} \oplus mid_{02} \oplus mid \oplus_{03} \oplus k1_{i2}$$

$$mid_{13} = mid_{00} \oplus mid_{01} \oplus mid_{02} \oplus k_{1i3} \tag{11}$$

As is evident from these expressions, the output from each processing route of the key-dependent linear transformation part 347 contains input data of at least two or more other routes in the form of exclusive ORs in this example, and accordingly the output data of each route is so homogenized as to contain two or more components of the four pieces of input data.

These pieces of output data $mid_{10}$, $mid_{11}$, $mid_{12}$ and $mid_{13}$ are nonlinearly transformed to corresponding pieces of data $out_0$, $out_1$, $out_2$ and $out_3$ in nonlinear transformation parts 348, 349, 350 and 351, respectively, and the pieces of data are provided as output data from the respective processing routes to a combining part 352, wherein they are combined into a single piece of block data $Y_i^*$. That is, for example, four pieces of 8-bit data are combined into one piece of 32-bit data. The data $Y_i^*$ is linearly transformed by extended key $k_{2i}$ to data $Y_i$ in a key-dependent linear transformation part 353; thus, the output data $Y_i$ from the nonlinear function part 304 is generated. The nonlinear transformation parts 343 to 346 and 348 to 351 are similar, for instance, to the S-box in the DES, and they are each formed, for example, by a ROM whose output data differs with the input data thereto.

The four nonlinear transformation parts 343 to 346 are arranged in parallel and their transformation processes are not associated with one another, and hence they can be executed in parallel; accordingly, an increase in the processing time by increasing the number of such nonlinear transformation parts can be deal with by the parallel processing thereof. The same is true of the nonlinear transformation parts 348 to 351.

The time necessary for processing in the linear operation part 305 (Fig. 3) and the key-dependent linear transformation parts 341, 347 and 353 (Fig. 4), which constitute each round processing part $38_i$, is appreciably shorter than the time required to perform processing of the nonlinear transformation parts 343 to 345 and 348 to 351 similar to the S-box; therefore, the time necessary for encryption processing is substantially in proportion to the number of S-boxes or nonlinear transformation parts used. However, since the key-dependent linear transformation part 347 renders plural pieces of input data into homogenized outputs as described previously, it is possible to omit one or more of the nonlinear transformation parts 348 to 351 and input the corresponding pieces of data into the combining part 352 when it is preknown that the key-dependent linear transformation part 347 performs such a particular linear transformation as described above with reference to Fig. 5. This can be done without diminishing the security against the differential and linear cryptanalysis, and the workload for encryption can be reduced by the number of nonlinear transformation parts thus omitted. For example, when the key-dependent linear transformation part 347 is such as shown in Fig. 5, even if the nonlinear transformation parts 349 and 350 are omitted and the pieces of data $mid_{11}$ and $mid_{12}$ are fed intact into the combining part 352, the security against the differential and linear cryptanalysis remains unchanged but the encryption speed increases about 33%. In other words, when the operation of the key-dependent linear transformation part 347 is predetermined, the presence of one or more of the nonlinear transformation parts 348 to 351 may sometimes has nothing to do with the security against the differential and linear cryptanalysis, in which case they can be omitted.

Incidentally, in Fig. 3 the generation of the extended key {fk, $k_{00}$, $k_{10}$, $k_{20}$, $k_{01}$, $k_{11}$, ..., $k_{0(n-1)}$, $k_{1(n-1)}$, $k_{2(n-1)}$, ek} by the extended key generation part 321 can be done in the same manner as in the extended key generating part 16 for the DES in Fig. 1.

If the above cryptographic device is designed so that, for example, the nonlinear transformation parts 343 to 346 and 348 to 351 are each approximated with a probability of $p_b = 2^{-6}$ by the differential and linear cryptanalysis techniques and that each round processing part $38_i$ performs the nonlinear transformation twice, that is, performs in tandem the processing by the transformation parts 343 to 346 and the processing by the transformation parts 348 to 351, each round is approximated with a probability of $p_i \leq 2^{-12}$; setting the number n of rounds at n = 3m, the round processing of the entire cryptographic device is approximated with a probability of $P \leq 2^{-24m}$. For example, if m = 4 (the number of rounds: 12), the probability becomes $P \leq 2^{-96}$, which satisfies a security condition $P < 2^{-64}$ with a smaller number of rounds than that 16 of the DES, providing a cryptographic device with a sufficiently high level of security against the differential and linear cryptanalysis. That is, according to the present invention, the security against cryptanalysis can be increased by configuring the round function 12 (Fig. 1) to perform the nonlinear transformation twice in succession.

Since the key-dependent initial linear transformation part 302, the key-dependent final linear transformation part 308 and the key-dependent linear transformation parts 347 and 353 are linear transformation parts that are dependent on extended keys, they provide sufficient security against other cryptanalysis as well as the differential and linear cryptanalysis, ensuring the implementation of a cryptographic device that attaches prime importance on security.

The present invention is not limited specifically to this embodiment; for example, if it is desirable to speed up encryption, it is possible to omit any one or all of these key-dependent initial linear transformation part 302, the key-dependent final linear transformation part 308 and the key-dependent linear transformation part 353 as in the embodiment described later on. In this instance, the security against the differential and linear cryptanalysis will not be diminished on the one hand, but on the other hand the processing speed for encryption can be increased corresponding to the number of operations omitted. But there is a fear of providing decreased security against the other cryptanalysis. Alternatively, any one or all of the key-dependent initial linear transformation part 302, the key-dependent final transformation part 308 and the key-dependent linear transformation parts 347 and 353 may be modified to key-independent linear transformation parts. This will not diminish the security against the other cryptanalysis as well as the differential and linear cryptanalysis, and makes it possible to increase the processing speed for encryption by implement optimization. The linear transformation parts each perform a transposition of swapping bit positions of input data in a predetermined relationship, a rotation of the input data by a predetermined number of bits, and so forth. The key-dependent linear transformation parts each perform a rotation by the number of bits corresponding to the extended key, an exclusive OR of the input data and the extended key, and so on.

EMBODIMENT 2

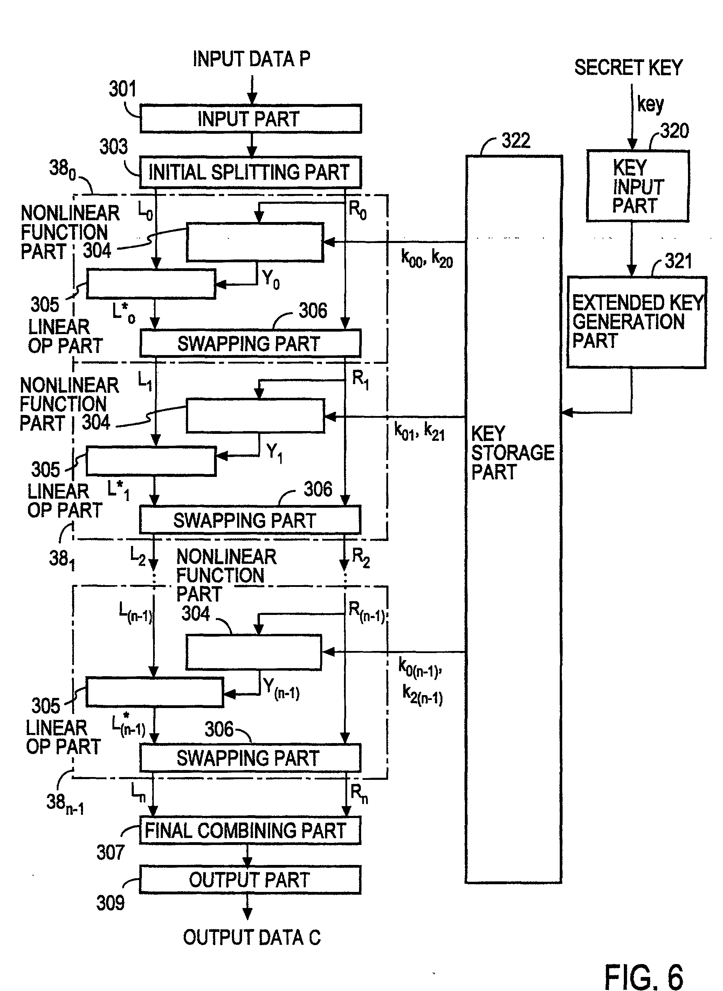

Fig. 6 illustrates an embodiment which omits middle two of the second four nonlinear transformation parts 348 to 351 in the nonlinear function part 304 (Fig. 4) of the first embodiment shown in Fig. 3. In this embodiment there are also omitted the key-dependent initial linear transformation part 302 and the key-dependent final linear transformation part 308.

The input data P equivalent to a plaintext is input into the cryptographic device via the input part 301. The input data P is split to two pieces of block data $L_0$ and $R_0$ in the initial splitting part 303. The block data $R_0$ is input to the nonlinear function part 304 of the 0-th round processing part $38_0$, together with the extended key $k_{00}$ and $k_{20}$ stored in the key storage part 322, wherein it is transformed to data $Y_0$ through transformation processing. The data $Y_0$ and the data $L_0$ are transformed to data $L_0^*$ by an operation in the linear operation part 305. The data $L_0^*$ and the data $R_0$ are subjected to data-position swapping in the swapping part 306 to provide $L_1 = R_0$ and $R_1 = L_0^*$. Thereafter, in the i-th round processing part $38_i$ (i=1, ..., n-1) the same processing as described above is repeated for the two pieces of data $L_i$ and $R_i$. That is, the data $R_i$, one of the two pieces of data $L_i$ and $R_i$, is input into the nonlinear function part 304, together with the extended key $k_{0i}$ and $k_{2i}$ stored in the key storage part 322, and in the nonlinear function part 304 it is transformed to data $Y_i$. The data $Y_i$ and the data $L_i$ are transformed to data $L_i^*$ by an operation in the linear operation part 305. The data $L_i^*$ and the data $R_i$ are swapped in data position in the swapping part 306 for transformation to $L_{i+1} = R_i$ and $R_{i+1} = L_i^*$.

Letting n represent the repeat count suitable to ensure security of the cryptosystem, two pieces of data $L_n$ and $R_n$ are obtained by such n repeated rounds of processing. These pieces of data $L_n$ and $R_n$ are combined in the final combining part 307, and the combined output is provided to the output part 309, from which the output data C is output as the ciphertext.

To decrypt, the encryption procedure needs only to be reversed, by which the plaintext P can be derived from the ciphertext C.

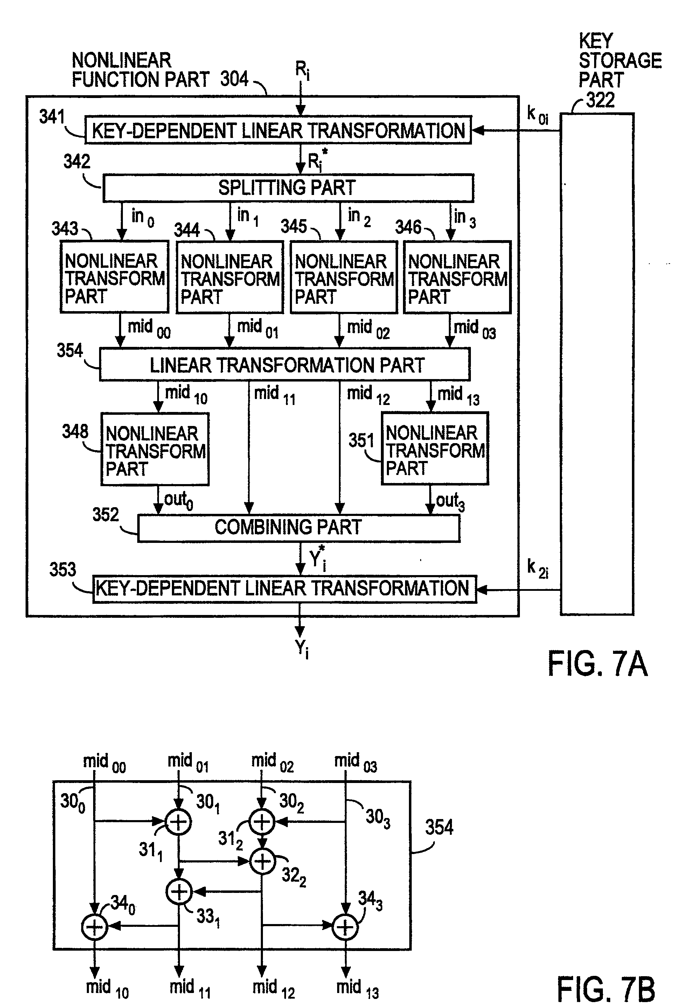

Fig. 7A illustrates the functional configuration of the nonlinear function part 304 of the i-th round processing part $38_i$ in the Fig. 6. The data $R_i$ from the preceding round processing part constitutes input data to the nonlinear function part 304, together with the extended key $k_{0i}$ and $k_{2i}$ stored in the key storage part 322. The data $R_i$ is linearly

transformed to data $R_i^*$ in the key-dependent linear transformation part 341 using the extended key $k_{0i}$. Then the data $R_i^*$ is split to four pieces of data $in_0$, $in_1$, $in_2$ and $in_3$ in the splitting part 342. The four pieces of data $in_0$, $in_1$, $in_2$ and $in_3$ are nonlinearly transformed to four pieces of data $mid_{00}$, $mid_{01}$, $mid_{02}$ and $mid_{03}$ in the nonlinear transformation parts 343, 344, 345 and 346, respectively, from which they are input to a linear transformation part 354. In the linear transformation part 354 the four pieces of input data are transformed so that they are mutually associated between the four processing routes $30_0$ to $30_3$ as depicted in Fig. 7B. This is the same example as in the case of omitting the logical operation with the extended key in Fig. 5 and can be given by the following expressions.

$$mid_{10} = mid_{00} \oplus mid_{02} \oplus mid_{03}$$

$$mid_{11} = mid_{02} \oplus + mid_{03}$$

$$mid_{12} = mid_{00} \oplus mid_{01} \oplus mid_{02} \oplus mid_{03}$$

$$mid_{13} = mid_{00} \oplus mid_{01} \oplus mid_{02} \tag{12}$$

By this linear transformation, homogenized data $mid_{10}$, $mid_{11}$, $mid_{12}$ and $mid_{13}$ are generated, and two pieces of data $mid_{10}$ and $mid_{13}$ are nonlinearly transformed to data $out_0$ and $out_3$ in the nonlinear transformation parts 348 and 351, respectively, after which the four pieces of data $out_0$, $mid_{11}$, $mid_{12}$ and $out_3$ are combined into a single piece of data $Y_i^*$ in the combining part 352. Finally, the data $Y_i^*$ is linearly transformed to the data $Y_i$ in the key-dependent linear transformation part 353 using the extended key $k_{2i}$, by which the output data $Y_i$ from the nonlinear function part 304 is generated.

The nonlinear transformation parts 343 to 346 are arranged in parallel and their transformation processes are not associated with one another, and hence they can be executed in parallel. The same goes for the nonlinear transformation parts 348 and 351. In this embodiment, since the number of second nonlinear transformations in each nonlinear function part 304 is reduced to the outer two (348 and 351) alone, the workload for encryption of decryption can be decreased accordingly.

Incidentally, the extended key $k_i$ is data transformed in the extended key generation part 321 from the secret key Key input into the cryptographic device via the key input part 320 and stored in the key storage part 322.

In the case of the above cryptographic device, for example, if the nonlinear transformation parts 343 to 346, 348 and 351 are designed to provide an approximate representation with the probability of $p_b = 2^{-6}$ against the differential and linear cryptanalysis, each round processing part can provide an approximate representation with the same probability of $p_i \leq 2^{-12}$ as in Embodiment 1; setting the number n of rounds at n = 3m, the cryptographic device provides an approximate representation with the probability of $P \leq 2^{-24m}$ as a whole. For example, if m = 4 (the number of rounds: 12), the probability becomes $P \leq 2^{-96}$, ensuring a sufficiently high level of security against the differential and linear cryptanalysis.

Moreover, the presence of the key-dependent linear transformation part 353 provides a margin of security against other cryptanalysis than the differential and linear cryptanalysis, and the simplified configuration as compared with that of Embodiment 1 reduces the workload. That is, the cryptographic device of this embodiment places importance on the balance between security and reduced workload.

<u>EMBODIMENT 3</u>

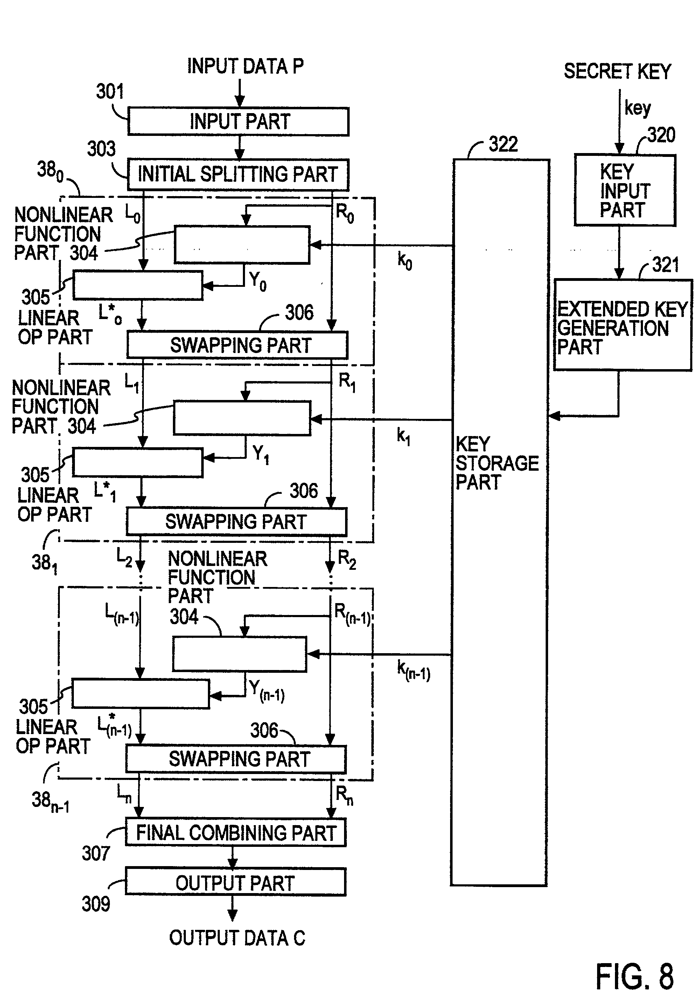

Fig. 8 illustrates an embodiment which omits the key-dependen t linear transformation part 353 in the nonlinear function part 3 04 of the second embodiment depicted in Fig. 6. The input data P equivalent to a plaintext is input into the cryptographic device via the input part 301. The input data P is split to two pieces of block data $L_0$ and $R_0$ in the initial splitting part 303. The block data $R_0$ is input to the nonlinear function part 304 of the 0-th round processing part $38_0$, together with extended key $k_0$ stored in the key storage part 322, wherein it is transformed to data $Y_0$ through transformation processing. The data $Y_0$ and the data $L_0$ are transformed to data $L_0^*$ by an operation in the linear operation part 305. The data $L_0^*$ and the data $R_0$ are subjected to data-position swapping in the swapping part 3 06 for transformation to $L_1 = R_0$ and $R_1 = L_0^*$. Thereafter, in the i-th round processing part $38_i$ the same processing as described above is repeated for the two pieces of data $L_i$ and $R_i$. That is, the data $R_i$, one of the two pieces of data $L_i$ and $R_i$, is input into the nonlinear function part 304, together with extended key $k_i$ stored in the key storage part 322, and in the nonlinear function part 304 it is transformed to data $Y_i$. The data $Y_i$ and the data $L_i$ are transformed to data $L_i^*$ by an operation in the linear operation part 305. The data $L_i^*$ and the data $R_i$ are swapped in data position in the swapping part 306 for transformation to $L_{i+1} = R_i$ and $R_{i+1} = L_i^*$, and two pieces of block data $L_{i+1}$ and $R_{i+1}$ are output.

Letting n represent the repeat count suitable to ensure security of the cryptosystem, two pieces of data $L_n$ and $R_n$ are obtained by such n repeated rounds of processing. These pieces of data $L_n$ and $R_n$ are combined in the final combining part 307, and the combined output is provided to the output part 309, from which the output data C is output as the ciphertext.

The ciphertext C can be deciphered to the plaintext P by following the encryption procedure in reverse.

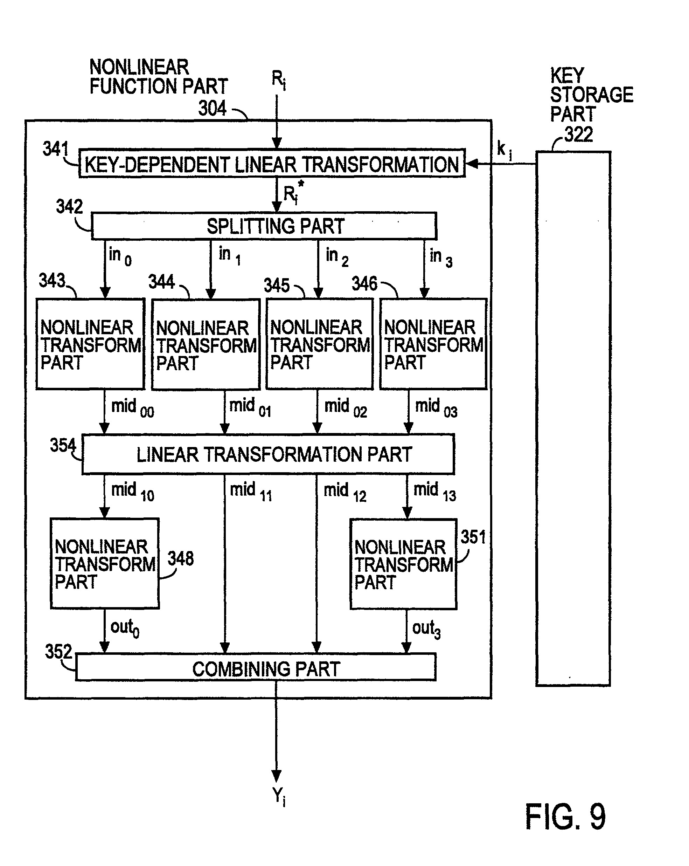

Fig. 9 illustrates the functional configuration of the nonlinear function part 304 in the Fig. 8. The data $R_i$ to the nonlinear function part 304 is fed to the key-dependent linear transformation part 341, together with the extended key $k_i$ stored in the key storage part 322. The data $R_i$ is linearly transformed to data $R_i^*$ in the key-dependent linear transformation part 341 using the extended key $k_i$. Then the data $R_i^*$ is split to four pieces of data $in_0$, $in_1$, $in_2$ and $in_3$ in the splitting part 342. The four pieces of data $in_0$, $in_1$, $in_2$ and $in_3$ are nonlinearly transformed to four pieces of data $mid_{00}$, $mid_{01}$, $mid_{02}$ and $mid_{03}$ in the nonlinear transformation parts 343, 344, 345 and 346, respectively, from which they are input to the linear transformation part 354. The linear transformation part 354 linearly transforms them to the following pieces of data $mid_{10}$, $mid_{11}$, $mid_{12}$ and $mid_{13}$, for example, in the same manner as described above with reference to Fig. 7B in Embodiment 2.

$$mid_{10} = mid_{00} \oplus mid_{02} \oplus mid_{03}$$

$$mid_{11} = mid_{02} \oplus mid_{03}$$

$$mid_{12} = mid_{00} \oplus mid_{01} \oplus mid_{02} \oplus mid_{03}$$

$$mid_{13} = mid_{00} \oplus mid_{01} \oplus mid_{02} \tag{13}$$

Then the two pieces of data $mid_{10}$ and $mid_{13}$ are nonlinearly transformed to data $out_0$ and $out_3$ in the nonlinear transformation parts 348 and 351, respectively, after which the four pieces of data $out_0$, $mid_{11}$, $mid_{12}$ and $out_3$ are combined into a single piece of data in the combining part 352, by which the output data $Y_i$ from the nonlinear function part 304 is generated.

The nonlinear transformation parts 343 to 346 are arranged in parallel and their transformation processes are not associated with one another, and hence they can be executed in parallel. The same goes for the nonlinear transformation parts 348 and 351.

Incidentally, the extended key $k_i$ is data transformed in the extended key generation part 321 from the secret key Key input into the cryptographic device via the key input part 320 and stored in the key storage part 322.

In the case of the above cryptographic device, for example, if the nonlinear transformation parts 343 to 346, 348 and 351 are designed to provide an approximate representation with the probability of $p_b = 2^{-6}$ against the differential and linear cryptanalysis, each round processing part can provide an approximate representation with the probability of $p_i \leq 2^{-12}$; setting the number n of rounds at n = 3m, the cryptographic device provides an approximate representation with the probability of $P \leq 2^{-24m}$ as a whole. For example, if m = 4 (the number of rounds: 12), the probability becomes $P \leq 2^{-96}$, ensuring a sufficiently high level of security against the differential and linear cryptanalysis.

Moreover, since the cryptographic device of this embodiment has a configuration that includes the minimum number of parts required to provide a sufficient level of security against the differential and linear cryptanalysis, the workload is reduced and the encryption or decryption speed is improved accordingly.

In the above, the splitting part 342 in the nonlinear function part 304 needs not always to split the input data into four but may also split it to an arbitrary number of pieces. In the case splitting the data into four, the number of second nonlinear transformation parts may be reduced to only two as depicted in Figs. 7A and 9.

In the following table there are shown, in comparison with the case of the DES of Figs. 1 and 2, the security level per round, the number of rounds satisfying the security requirement and the workload (the number of steps) necessary therefor in the case of using six nonlinear transformation parts (343 to 346, 348, 351) in the nonlinear function part 304 (a round function) depicted in the second and third embodiments described above. In the comparison, the embodiments of the present invention used a total of 32 bits for the data to the nonlinear transformation parts 343 to 346 which correspond to the S-boxes of the DES, and hence the data to each nonlinear transformation part was 8-bit; therefore, the size of each S-box was made 8-bit and consequently, the number of S-boxes was four.

| Comparative Table | | | |
|---|---|---|---|
| | No. of S-boxes per round | Security level per round | Required No. of rounds | No. of steps |
| DES | 4 | $2^{-6}$ | 17 | 68 |

(continued)

| Comparative Table | | | | |
|---|---|---|---|---|
| | No. of S-boxes per round | Security level per round | Required No. of rounds | No. of steps |
| This invention | 6 | $2^{-12}$ | 9 | 54 |

As will be seen from this table, the number of S-boxes (the number of nonlinear transformation parts) per round in the present invention is larger than in the DES, but the security level per round in the present invention is twice that of the DES. On this account, the number of rounds required to meet the security requirement is smaller than in the case of DES, and the workload (the number of steps) necessary for providing the security is also smaller.

EFFECT OF THE INVENTION

As described above in detail, according to the present invention, the input data is split to plural pieces of data in the nonlinear function part, then these pieces of data are nonlinearly transformed and linearly transformed in association with each other, and at least one part of such linearly transformed data is nonlinearly transformed, by which it is possible to provide a highly secure cryptographic device for concealing data in data communication or storage.

**Claims**

1. A cryptographic device for encrypting input data by sequentially processing it by a plurality of round processes, comprising:

   an initial splitting part (303) for splitting the input data into two pieces of block data;
   a key storage part (322) for storing an extended key;
   a plurality of cascade-connected round processing parts ($38_0$-$38_{n-1}$) which are supplied with said two pieces of block data for sequentially processing them using respective split pieces of the extended key; and
   a final combining part (307) for combining two pieces of block data output from the last one of said plurality of cascade-connected round processing parts into a single piece of data and for outputting that single piece of data;

   wherein each of said plurality of round processing parts ($38_0$-$38_{n-1}$) comprises:

   a nonlinear function part (304) for transforming one of two pieces of input block data input into the respective round processing part from the preceding stage by using a corresponding one of said split pieces of the extended key;
   a linear operation part (305) for linearly operating the output data from said nonlinear function part (304) and the other one of said two pieces of input block data; and
   a swapping part (306) for swapping the output data from said linear operation part (305) and the piece of input block data to said nonlinear function part (304) and for providing the two pieces of swapped data as two pieces of input block data to the round processing part of the subsequent stage;

   wherein said nonlinear function part (304) comprises:

   a first linear transformation part (341) for linearly transforming the respective one piece of input block data by using the corresponding one of said split pieces of the extended key to thereby generate first transformed data;
   a splitting part (342) for splitting the first transformed data into a plurality of bit strings;
   a plurality of first nonlinear transformation parts (343-346) for nonlinearly transforming all these bit strings, respectively, and outputting corresponding pieces of second transformed data;
   a second linear transformation part (347) for linearly transforming the pieces of second transformed data in association with each other such that the piece of second transformed data from each of said first nonlinear transformation parts (343-346) is affected by the piece of second transformed data from at least one other one of said first nonlinear transformation parts, and outputting the resulting data as a plurality of pieces of homogenized data to a plurality of routes, respectively;
   a second nonlinear transformation part (348-351) provided in at least one of said plurality of routes, for nonlinearly transforming the corresponding piece of said homogenized data into third transformed data, and for outputting the third transformed data as data of that route;

a combining part (352) adapted to combine data from said plurality of routes into output data of said nonlinear function part.

2. The device of claim 1, wherein said second linear transformation part (347) comprises a key-dependent linear operation part adapted to linearly transform said plurality of pieces of homogenized data by using a corresponding one of said split pieces of the extended key and outputting the plurality of transformed data as data of said plurality of routes.

3. The device of claim 1 or 2, wherein there is provided a third linear transformation part (353) for linearly transforming the output data from said combining part (352) to provide the output data of said nonlinear function part (304).

4. The device of claim 3, wherein said third linear transformation part (353) is adapted to perform a linear transformation by using a corresponding one of said split pieces of the extended key.

5. The device of any one of claims 1 through 4, wherein said second linear transformation part (347) comprises at least one exclusive OR circuit ($31_1$, $31_2$, $32_2$, $33_1$, $34_3$) provided in each of said plurality of routes, for outputting, as said homogenized data to the respective route, the exclusive-OR of data of the respective route and data of other routes.

6. The device of any one of claims 1 through 5, wherein there is provided an initial linear transformation part (302) for linearly transforming said input data and for supplying the transformed input data to said initial splitting part (303).

7. The device of claim 6, wherein said initial linear transformation part (303) is adapted to perform a linear transformation of said input data by using a corresponding one of said split pieces of the extended key.

8. The device of any one of claims 1 through 7, wherein there is provided a final linear transformation part (308) for linearly transforming the output data of said final combining part (307) to provide the transformed output data as the output of said cryptographic device.

9. The device of claim 8, wherein said final linear transformation part (308) is adapted to perform a linear transformation of said output data by using a corresponding one of said split pieces of the extended key.

10. The device of any one of claims 1 through 9, wherein said plurality of routes are a first, second, third and fourth route ($30_0$-$30_3$) arranged in this order.

11. The device of claim 10, wherein said second nonlinear transformation part (348-351) is provided in each of said four routes.

12. The device of claim 10, wherein said second nonlinear transformation part (348-351) is provided in each of said first and fourth routes.

13. The device of claim 12, wherein said second linear transformation (347) part comprises:

four routes ($30_0$-$30_3$) each for receiving a respective one of said pieces of second transformed data ($mid_{00}$ -$mid_{03}$);
a first exclusive OR circuit ($31_1$) provided in the second route, for carrying out the exclusive-OR between the data ($mid_{00}$) received by the first route and the data ($mid_{01}$) received by the second route;
a second exclusive-OR circuit ($31_2$) provided in the third route ($30_2$), for carrying out the exclusive OR between the data ($mid_{03}$) received by the fourth route and the data ($mid_{02}$) received by the third route;
a third exclusive-OR circuit ($32_2$) provided in said third route, for carrying out the exclusive OR between the output of said second exclusive-OR circuit ($31_2$) and the output of said first exclusive-OR circuit ($31_1$);
a fourth exclusive-OR circuit ($33_1$) provided in said second route, for carrying out the exclusive OR between the output of said first exclusive-OR circuit ($31_1$) and the output of said third exclusive-OR circuit ($32_2$).
a fifth exclusive-OR circuit ($34_0$) provided in said first route, for carrying out the exclusive OR between the data ($mid_{00}$) received by the first route and the output of said fourth exclusive-OR circuit ($33_1$); and
a sixth exclusive-OR circuit ($34_3$) provided in said fourth route, for carrying out the exclusive OR between the

data ($mid_{03}$) received by the fourth route and the output of said third exclusive-OR circuit ($32_2$).

**Patentansprüche**

1. Kryptographiegerät zum Verschlüsseln von Eingabedaten durch sequentielles Verarbeiten derselben durch eine Mehrzahl von Rundenprozessen, mit:

   einem anfänglichen Aufspaltungsteil (303) zum Aufspalten der Eingabedaten in zwei Stück Blockdaten;
   einem Schlüsselspeicherteil (322) zum Speichern eines erweiterten Schlüssels;
   einer Mehrzahl von hintereinander geschalteten Rundenverarbeitungsteilen ($38_0$ - $38_{n-1}$), die mit den zwei Stück Blockdaten versorgt sind, um sie sequentiell jeweils unter Verwendung abgespaltener Stücke des erweiterten Schlüssels zu verarbeiten; und
   einem abschließenden Kombinierteil (307) zum Kombinieren von zwei Stück von aus dem letzten der mehreren hintereinander geschalteten Rundenverarbeitungsteile ausgegebenen Blockdaten zu einem einzigen Stück Daten und zum Ausgaben dieses einzigen Stücks Daten;

   wobei jedes aus der Mehrzahl der Rundenverarbeitungsteile ($38_0$ - $38_{n-1}$) umfasst:

   ein Nichtlinearfunktionsteil (304) zum Transformieren eines der zwei Stück von in das jeweilige Rundenverarbeitungsteil von der vorhergehenden Stufe eingegebenen Eingabeblockdaten durch Verwendung eines entsprechenden der abgespaltenen Stücke des erweiterten Schlüssels;
   ein Linearoperationsteil (305) zum linearen Verarbeiten der Ausgabedaten aus dem Nichtlinearfunktionsteil (304) und des jeweils anderen der zwei Stück Eingabeblockdaten; und
   ein Vertauschungsteil (306) zum Vertauschen der Ausgabedaten aus dem Linearoperationsteil (305) und des Stücks Eingabeblockdaten für das Nichtlinearfunktionsteil (304) und Bereitstellen der zwei Stück vertauschter Daten als zwei Stück Eingabeblockdaten für das Rundenverarbeitungsteil der nachfolgenden Stufe;

   wobei das Nichtlinearfunktionsteil (304) umfasst:

   ein erstes Lineartransformationsteil (341) zum linearen Transformieren des jeweiligen einen Stückes Eingabeblockdaten durch Verwendung des entsprechenden unter den abgespaltenen Stücken des erweiterten Schlüssels, um so erste transformierte Daten zu erzeugen;
   ein Aufspaltungsteil (342) zum Aufspalten der ersten transformierten Daten in eine Mehrzahl von Bit-Ketten;
   eine Mehrzahl von ersten Nichtlineartransformationsteilen (343 bis 346) zum nichtlinearen Transformieren aller dieser Bit-Ketten und zum Ausgeben von entsprechenden Stücken zweiter transformierter Daten;
   ein zweites Lineartransformationsteil (347) zum linearen Transformieren der Stücke von zweiten transformierten Daten in Verknüpfung miteinander, so dass das Stück zweite transformierte Daten aus jedem der ersten Nichtlineartransformationsteile (343 bis 346) durch das Stück zweite transformierte Daten aus wenigstens einem anderen der ersten Nichtlineartransformationsteile beeinflusst wird, und Ausgeben der resultierenden Daten als eine Mehrzahl von Stücken homogenisierter Daten an eine Mehrzahl von Wegen;
   ein zweites Nichtlineartransformationsteil (348 bis 351), das in wenigstens einem der Mehrzahl von Wegen vorgesehen ist, zum nichtlinearen Transformieren des entsprechenden Stücks homogenisierter Daten in dritte transformierte Daten und zum Ausgeben der dritten transformierten Daten als Daten dieses Weges;
   ein Kombinierteil (352), das eingerichtet ist, um Daten von der Mehrzahl von Wegen zu Ausgabedaten des Nichtlinearfunktionsteiles zu kombinieren.

2. Gerät nach Anspruch 1, bei dem das zweite Lineartransformationsteil (347) ein schlüsselabhängiges Linearoperationsteil umfasst, das angepasst ist, um die Mehrzahl von Stücken homogenisierter Daten unter Verwendung eines entsprechenden der abgespaltenen Stücke des erweiterten Schlüssels linear zu transformieren und die Mehrzahl transformierter Daten als Daten der Mehrzahl von Wegen auszugeben.

3. Gerät nach Anspruch 1 oder 2, bei dem ein drittes Lineartransformationsteil (353) zum linearen Transformieren der Ausgabedaten aus dem Kombinierteil (352) zum Bereitstellen der Ausgabedaten des Nichtlinearfunktionsteiles (304) vorgesehen ist.

4. Gerät nach Anspruch 3, bei dem das dritte Lineartransformationsteil (353) eingerichtet ist, eine lineare Transformation unter Verwendung eines entsprechenden der abgespaltenen Stücke des erweiterten Schlüssels auszuführen.

5. Gerät nach einem der Ansprüche 1 bis 4, bei dem das zweite Lineartransformationsteil (347) wenigstens eine Exklusiv-Oder-Schaltung ($31_1$, $31_2$, $32_2$, $33_1$, $34_3$) umfasst, die in jedem der Mehrzahl von Wegen vorgesehen ist, um als die homogenisierte Daten an den jeweiligen Weg die Exklusiv-Oder-Verknüpfung von Datens des jeweiligen Weges und von Daten anderer Wege auszugeben.

6. Gerät nach einem der Ansprüche 1 bis 5, bei dem ein anfängliches Lineartransformationsteil (302) zum linearen Transformieren der Eingabedaten und zur Lieferung der transformierten Eingabedaten an das anfängliche Aufspaltungsteil (303) vorgesehen ist.

7. Gerät nach Anspruch 6, bei dem das anfängliche Lineartransformationsteil (303) eingerichtet ist, eine Lineartransformation der Eingabedaten unter Verwendung eines entsprechenden der abgespaltenen Stücke des erweiterten Schlüssels durchzuführen.

8. Gerät nach einem der Ansprüche 1 bis 7, bei dem ein abschließendes Lineartransformationsteil (308) zum linearen Transformieren der Ausgabedaten des abschließenden Kombinierteiles (307) vorgesehen ist, um die transformierten Ausgabedaten als die Ausgabe des Kryptographiegerätes bereitzustellen.

9. Gerät nach Anspruch 8, bei der das abschließende Lineartransformationsteil (308) eingerichtet ist, eine lineare Transformation der Ausgabedaten unter Verwendung eines entsprechenden der abgespaltenen Stücke des erweiterten Schlüssels auszuführen.

10. Gerät nach einem der Ansprüche 1 bis 9, bei dem die Mehrzahl von Wegen ein erster, zweiter, dritter und vierter Weg ($30_0$ bis $30_3$), angeordnet in dieser Reihenfolge, ist.

11. Gerät nach Anspruch 10, bei dem das zweite Nichtlineartransformationsteil (348 bis 351) in jedem der vier Wege vorgesehen ist.

12. Gerät nach Anspruch 10, bei dem das zweite Nichtlineartransformationsteil (348 - 351) in dem ersten und in dem vierten Weg vorgesehen ist.

13. Gerät nach Anspruch 12, bei der das zweite Lineartransformationsteil (347) umfasst:

vier Wege ($30_0$ bis $30_3$), jeweils zum Empfangen eines der Stücke von zweiten transformierten Daten ($mid_{00}$ - $mid_{03}$);
eine erste Exklusiv-Oder-Schattung ($31_1$), die in dem zweiten Weg vorgesehen ist, zum Ausführen der Exklusiv-Oder-Verknüpfung zwischen den durch den ersten Weg empfangenen Daten ($mid_{00}$) und den durch den zweiten Weg empfangenen Daten ($mid_{01}$);
eine zweite Exklusiv-Oder-Schaltung ($31_2$), die in dem dritten Weg ($30_2$) vorgesehen ist, zum Ausführen der Exklusiv-Oder-Verknüpfung zwischen den durch den vierten Weg empfangenen Daten ($mid_{03}$) und den durch den dritten Weg empfangenen Daten ($mid_{02}$);
eine dritte Exklusiv-Oder-Schaltung ($32_2$), die in dem dritten Weg vorgesehen ist, zum Ausführen der Exklusiv-Oder-Verknüpfung zwischen der Ausgabe der zweiten Exklusiv-Oder-Schaltung ($31_2$) und der Ausgabe der ersten Exklusiv-Oder-Schaltung ($31_1$);
eine vierte Exklusiv-Oder-Schaltung ($33_1$), die in dem zweiten Weg vorgesehen ist, zum Ausführen der Exklusiv-Oder-Verknüpfung zwischen der Ausgabe der ersten Exklusiv-Oder-Schaltung ($31_1$) und der Ausgabe der dritten Exklusiv-Oder-Schaltung ($32_2$);
eine fünfte Exklusiv-Oder-Schaltung ($34_0$), die in dem ersten Weg vorgesehen ist, zum Ausführen der Exklusiv-Oder-Verknüpfung zwischen den durch den ersten Weg empfangenen Daten ($mid_{00}$) und der Ausgabe der vierten Exklusiv-Oder-Schaltung ($33_1$); und
eine sechste Exklusiv-Oder-Schaltung ($34_3$), die in dem vierten Weg vorgesehen ist, zum Ausführen der Exklusiv-Oder-Verknüpfung zwischen den durch den vierten Weg empfangenen Daten ($mid_{03}$) und der Ausgabe der dritten Exklusiv-Oder-Schaltung ($32_2$).

**Revendications**

1. Dispositif cryptographique pour crypter des données d'entrée en les traitant séquentiellement par une pluralité de processus de tours, comprenant :

   une partie de décomposition initiale (303) pour décomposer les données d'entrée en deux données de blocs ;
   une partie de stockage de clé (322) pour stocker une clé étendue ;
   une pluralité de parties de traitement de tours connectées en cascade ($38_0$-$38_{n-1}$) auxquelles sont fournis lesdites deux données de blocs pour les traiter séquentiellement en utilisant des éléments décomposés de la clé étendue ; et
   une partie de combinaison finale (307) pour combiner deux données de blocs délivrées en sortie par la dernière de ladite pluralité de parties de traitement de tours connectées en cascade en une donnée unique et délivrer en sortie ladite donnée unique ;

   dans lequel chacune de ladite pluralité de parties de traitement de tours ($38_0$-$38_{n-1}$) comprend :

   une partie à fonction non linéaire (304) pour transformer l'une de deux données de blocs fournies en entrée en la partie de traitement de tours respective de l'étage précédent en utilisant l'un, correspondant, desdits éléments décomposés de la clé étendue ;
   une partie à opération linéaire (305) pour soumettre à une opération linéaire les données de sortie de ladite partie à fonction non linéaire (304) et l'autre desdites deux données de blocs d'entrée ; et
   une partie de permutation (306) pour permuter les données de sortie de ladite partie à opération linéaire (305) et la donnée de bloc d'entrée de ladite partie à fonction non linéaire (304) et pour fournir les deux données permutées en tant que deux données de blocs d'entrée à la partie de traitement de tours de l'étage suivant :

   dans lequel ladite partie à fonction non linéaire (304) comprend :

   une première partie de transformation linéaire (341) pour transformer linéairement la donnée respective parmi les données du bloc d'entrée en utilisant celui qui lui correspond desdits éléments décomposés de la clé étendue pour générer ainsi des premières données transformées ;
   une partie de décomposition (342) pour décomposer les premières données transformées en une pluralité de chaînes de bits ;
   une pluralité de premières parties de transformation non linéaire (343-346) pour transformer non linéairement toutes ces chaînes de bits, respectivement, et délivrer en sortie les secondes données transformées correspondantes ;
   une seconde partie de transformation linéaire (347) pour transformer linéairement les secondes données transformées en association les unes avec les autres de façon que la seconde donnée transformée provenant de chacune desdites premières parties de transformation non linéaire (343-346) soit affectée par la seconde donnée transformée provenant d'au moins une autre desdites premières parties de transformation non linéaire, et pour délivrer respectivement en sortie les données qui en résultent sous la forme d'une pluralité de données homogénéisées à une pluralité de voies d'acheminement ;
   une seconde partie de transformation non linéaire (348-351) disposée sur au moins l'une de ladite pluralité de voies d'acheminement, pour transformer non linéairement ladite donnée homogénéisée correspondante en une troisième donnée transformée et pour délivrer en sortie la troisième donnée transformée en tant que donnée de cette voie d'acheminement ;
   une partie de combinaison (352) apte à combiner des données provenant de ladite pluralité de voies d'acheminement en des données de sortie de ladite partie à fonction non linéaire.

2. Dispositif selon la revendication 1, dans lequel ladite seconde partie de transformation linéaire (347) comprend une partie à opération linéaire dépendant d'une clé apte à transformer linéairement ladite pluralité de données homogénéisées en utilisant l'un, correspondant, desdits éléments décomposés de la clé étendue et pour délivrer en sortie la pluralité de données transformées sous la forme de données de ladite pluralité de voies d'acheminement.

3. Dispositif selon la revendication 1 ou 2, dans lequel il est prévu une troisième partie de transformation linéaire (353) pour transformer linéairement les données de sortie de ladite partie de combinaison (352) afin de fournir les données de sortie de ladite partie à fonction non linéaire (304).

**4.** Dispositif selon la revendication 3, dans lequel ladite troisième partie de transformation linéaire (353) est apte à effectuer une transformation linéaire en utilisant l'un, correspondant, desdits éléments décomposés de la clé étendue.

**5.** Dispositif selon l'une quelconque des revendications 1 à 4, dans lequel ladite seconde partie de transformation linéaire (347) comprend au moins un circuit OU exclusif ($31_1$, $31_2$, $32_2$, $33_1$, $34_3$) prévu dans chacune de ladite pluralité de voies d'acheminement, pour délivrer en sortie à la voie d'acheminement respective, en tant que lesdites données homogénéisées, le OU exclusif de données de la voie d'acheminement respective et de données d'autres voies d'acheminement.

**6.** Dispositif selon l'une quelconque des revendications 1 à 5, dans lequel il est prévu une partie de transformation linéaire initiale (302) pour transformer linéairement lesdites données d'entrée et pour délivrer les données d'entrée transformées à ladite partie de décomposition initiale (303).

**7.** Dispositif selon la revendication 6, dans lequel ladite partie de transformation linéaire initiale (303) est apte à effectuer une transformation linéaire desdites données d'entrée en utilisant l'un, correspondant, desdits éléments décomposés de la clé étendue.

**8.** Dispositif selon l'une quelconque des revendications 1 à 7, dans lequel il est prévu une partie de transformation linéaire finale (308) pour transformer linéairement les données de sortie de ladite partie de combinaison finale (307) afin de fournir les données de sortie transformées en tant que sortie dudit dispositif cryptographique.

**9.** Dispositif selon la revendication 8, dans lequel ladite partie de transformation linéaire finale (308) est apte à effectuer une transformation linéaire desdites données de sortie en utilisant l'un, correspondant, desdits éléments décomposés de la clé étendue.

**10.** Dispositif selon l'une quelconque des revendications 1 à 9, dans lequel ladite pluralité de voies d'acheminement sont des première, seconde, troisième et quatrième voies d'acheminement ($30_0$-$30_3$) disposées dans cet ordre.

**11.** Dispositif selon la revendication 10, dans lequel ladite seconde partie de transformation non linéaire (348-351) est disposée sur chacune desdites quatre voies d'acheminement.

**12.** Dispositif selon la revendication 10, dans lequel ladite seconde partie de transformation non linéaire (348-351) est disposée sur chacune desdites première et quatrième voies d'acheminement.

**13.** Dispositif selon la revendication 12, dans lequel ladite seconde partie de transformation linéaire (347) comprend :

quatre voies d'acheminement ($30_0$-$30_3$) chacune destinée à recevoir l'une respective desdites secondes données transformées ($mid_{00}$-$mid_{03}$) ;
un premier circuit OU exclusif ($31_1$) disposé sur la seconde voie d'acheminement, pour effectuer le OU exclusif entre les données ($mid_{00}$) reçues par la première voie d'acheminement et les données ($mid_{01}$) reçues par la seconde voie d'acheminement ;
un second circuit OU exclusif ($31_2$) disposé sur la troisième voie d'acheminement ($30_2$), pour effectuer le OU exclusif entre les données ($mid_{03}$) reçues par la quatrième voie d'acheminement et les données ($mid_{02}$) reçues par la troisième voie d'acheminement ;
un troisième circuit OU exclusif ($32_2$) disposé sur ladite troisième voie d'acheminement, pour effectuer le OU exclusif entre la sortie dudit second circuit OU exclusif ($31_2$) et la sortie dudit premier circuit OU exclusif ($31_1$) ;
un quatrième circuit OU exclusif ($33_1$) disposé sur ladite seconde voie d'acheminement, pour effectuer le OU exclusif entre la sortie dudit premier circuit OU exclusif ($31_1$) et la sortie dudit troisième circuit OU exclusif ($32_2$) ;
un cinquième circuit OU exclusif ($34_0$) disposé sur ladite première voie d'acheminement, pour effectuer le OU exclusif entre les données ($mid_{00}$) reçues par la première voie d'acheminement et la sortie dudit quatrième circuit OU exclusif ($33_1$) ; et
un sixième circuit OU exclusif ($34_3$) disposé sur ladite quatrième voie d'acheminement, pour effectuer le OU exclusif entre les données ($mid_{03}$) reçues par la quatrième voie d'acheminement et la sortie dudit troisième circuit OU exclusif ($32_2$).

INITIAL
PERMUTATION
PART   11

PLAINTEXT P

SECRET KEY

$14_0$

$L_0$  13  12  $R_0$

f

$f(R_0, k_0)$

EXTENDED KEY
GENERATION
PART

16

$14_1$

$L_1$  13  12  $R_1$

f

$f(R_1, k_1)$

$L_2$  $R_2$

$14_{15}$

$L_{15}$  13  12  $R_{15}$

f

$f(R_{15}, k_{15})$

$L_{16}$  $R_{16}$

$R_{16}$  $L_{16}$

15 FINAL PERMUTATION
PART

CIPHERTEXT

FIG. 1

**FIG. 2**

FIG. 3

FIG. 4

FIG. 5

INPUT DATA P

SECRET KEY

301 INPUT PART

key 320

322

KEY INPUT PART

303 INITIAL SPLITTING PART

$38_0$

NONLINEAR FUNCTION PART 304

$L_0$ $R_0$

$k_{00}, k_{20}$

321

EXTENDED KEY GENERATION PART

$Y_0$

305 LINEAR OP PART

$L^*_0$

306 SWAPPING PART

NONLINEAR FUNCTION PART 304

$L_1$ $R_1$

$k_{01}, k_{21}$

KEY STORAGE PART

$Y_1$

305 LINEAR OP PART

$L^*_1$

306 SWAPPING PART

$38_1$ $L_2$ NONLINEAR FUNCTION PART $R_2$

$L_{(n-1)}$ 304 $R_{(n-1)}$

$Y_{(n-1)}$

305 LINEAR OP PART $L^*_{(n-1)}$

$k_{0(n-1)}, k_{2(n-1)}$

306 SWAPPING PART

$38_{n-1}$ $L_n$ $R_n$

FINAL COMBINING PART

307

OUTPUT PART

309

OUTPUT DATA C

FIG. 6

NONLINEAR
FUNCTION PART 304

KEY
STORAGE
PART
322

$R_i$

341 KEY-DEPENDENT LINEAR TRANSFORMATION $\longleftarrow$ $k_{0i}$

$R_i^*$

342 SPLITTING PART

$in_0$  $in_1$  $in_2$  $in_3$

343 NONLINEAR TRANSFORM PART

344 NONLINEAR TRANSFORM PART

345 NONLINEAR TRANSFORM PART

346 NONLINEAR TRANSFORM PART

$mid_{00}$  $mid_{01}$  $mid_{02}$  $mid_{03}$

354 LINEAR TRANSFORMATION PART

$mid_{10}$  $mid_{11}$  $mid_{12}$  $mid_{13}$

348 NONLINEAR TRANSFORM PART

351 NONLINEAR TRANSFORM PART

$out_0$  $out_3$

352 COMBINING PART

$Y_i^*$

353 KEY-DEPENDENT LINEAR TRANSFORMATION $\longleftarrow$ $k_{2i}$

$Y_i$

FIG. 7A

$mid_{00}$  $mid_{01}$  $mid_{02}$  $mid_{03}$

$30_0$  $30_1$  $30_2$  $30_3$

$31_1$  $31_2$

$32_2$

$33_1$

$34_0$  $34_3$

354

$mid_{10}$  $mid_{11}$  $mid_{12}$  $mid_{13}$

FIG. 7B

23

FIG. 8

NONLINEAR
FUNCTION PART
$R_i$

KEY
STORAGE
PART
322

304

341
KEY-DEPENDENT LINEAR TRANSFORMATION

$k_j$

$R_i^*$

342
SPLITTING PART

$in_0$     $in_1$     $in_2$     $in_3$

343    344    345    346

| NONLINEAR TRANSFORM PART | NONLINEAR TRANSFORM PART | NONLINEAR TRANSFORM PART | NONLINEAR TRANSFORM PART |

$mid_{00}$     $mid_{01}$     $mid_{02}$     $mid_{03}$

354
LINEAR TRANSFORMATION PART

$mid_{10}$     $mid_{11}$     $mid_{12}$     $mid_{13}$

NONLINEAR
TRANSFORM
PART   348

NONLINEAR
TRANSFORM
PART   351

$out_0$        $out_3$

352
COMBINING PART

$Y_i$

FIG. 9

25